# EUROPEAN PATENT APPLICATION

(11) **EP 4 354 533 A1**
(43) Date of publication of application: **17.04.2024**
(21) Application number: 22894589.5
(22) Date of filing: 26.10.2022
(51) Int. Cl.: H01M 4/13

(54) **ELECTRODE ASSEMBLY, WINDING METHOD, DEVICE, BATTERY CELL, BATTERY, AND ELECTRICAL APPARATUS**

(30) Priority: 18.11.2021 CN 202111372226
(71) Applicant: Contemporary Amperex Technology Co., Limited, Ningde, Fujian 352100 (CN)
(72) Inventor: ZHANG, Xiaowei, Ningde, Fujian 352100 (CN); WANG, Zhiwen, Ningde, Fujian 352100 (CN); ZHANG, Wei, Ningde, Fujian 352100 (CN); WEN, Yuqian, Ningde, Fujian 352100 (CN); TANG, Minghao, Ningde, Fujian 352100 (CN); ZHANG, Shengwu, Ningde, Fujian 352100 (CN)
(74) Representative: Ran, Handong
(86) International application number: PCT/CN2022/127597
(87) International publication number: WO 2023/088052

(57) **Abstract**

The present application relates to the technical field of new energy, and in particular to an electrode assembly, a winding method, a device, a battery cell, a battery, and an electrical apparatus. The electrode assembly comprises a first diaphragm, a first pole piece and a second diaphragm, which are arranged in a stacked manner, wherein the first pole piece is sandwiched between the first diaphragm and the second diaphragm; and in the width direction of the first pole piece, part of edges on two sides of starting sections of the first diaphragm and the second diaphragm are fixedly connected to each other. In this way, by means of the present application, the problem of a poor alignment degree of a starting section during the winding of a pole piece in an electrode assembly can be solved.

## Description

### CROSS-REFERENCE TO RELATED APPLICATIONS

This application claims priority to Chinese Patent Application No. 202111372226.0, filed on November 18, 2021 and entitled "ELECTRODE ASSEMBLY, WINDING METHOD AND DEVICE, BATTERY CELL, BATTERY, AND ELECTRIC APPARATUS", which is incorporated herein by reference in its entirety.

### TECHNICAL FIELD

This application relates to the field of new energy technologies, and specifically to an electrode assembly, a winding method and device, a battery cell, a battery, and an electric apparatus.

### BACKGROUND

With the rapid development of the new energy industry, increasingly high requirements are imposed on production yield rate of electrode assemblies. Winding methods, with the characteristics of high yield rate and low cost, have been widely used in production of electrode assemblies.

However, during winding of an electrode assembly, starting sections of electrode plates have no tension, and therefore, during feeding, the starting sections of the electrode plates likely suffer from deviation, poor attachment to a separator, and the like, leading to a lower alignment degree of the electrode plates and affecting the percent of pass of the electrode plates in production.

### SUMMARY

In view of the foregoing problems, this application provides an electrode assembly, a winding method and device, a battery cell, a battery, and an electric apparatus so as to resolve the problem of low alignment degree of starting sections of electrode plates in an electrode assembly during winding.

According to an aspect of this application, an electrode assembly is provided and includes a first separator, a first electrode plate, and a second separator that are stacked, where the first electrode plate is sandwiched between the first separator and the second separator; and along a width direction of the first electrode plate, partial edges of two sides of starting sections of the first separator and second separator are fixedly connected.

In the electrode assembly, the partial edges of the two sides of the starting sections of the first separator and second separator are fixedly connected, and the first electrode plate is sandwiched between the first separator and the second separator, such that the first separator and the second separator can limit displacement of the first electrode plate along the width direction rather than displacement of the first electrode plate along a length direction. This can not only ensure alignment degree of the starting sections during feeding of the first electrode plate but also ensure that the first separator, the first electrode plate, and the second separator can slide relative to each other during winding to adapt to different winding diameters, allowing for close attachment between the first separator, the first electrode plate, and the second separator, thereby ensuring winding quality of the electrode assembly and improving winding yield rate of the electrode assembly.

In an optional manner, along the width direction, partial edges of two sides of terminating sections of the first separator and second separator are fixedly connected. The partial edges of the two sides of the terminating sections of the first separator and second separator being fixedly connected can effectively ensure that terminating sections of the first separator, the first electrode plate, and the second separator are aligned, thereby preventing winding failure of the electrode assembly caused by tail misalignment while such winding failure affects production yield rate of the electrode assembly.

In an optional manner, the electrode assembly further includes a second electrode plate, where a starting section of the second electrode plate is fixedly connected to the second separator. The starting section of the second electrode plate being fixedly connected to the second separator ensures alignment degree of the starting section during feeding of the second electrode plate.

In an optional manner, a terminating section of the second electrode plate is fixedly connected to the second separator. The terminating section of the second electrode plate being fixedly connected to the second separator can effectively ensure that terminating sections of the first separator, the first electrode plate, the second separator, and the second electrode plate are aligned and closely attached to each other, thereby preventing winding failure of the electrode assembly caused by tail misalignment while such winding failure affects production yield rate of the electrode assembly.

According to another aspect of this application, a battery cell is provided and includes the foregoing electrode assembly.

In the battery cell of this application, in the electrode assembly, the partial edges of the two sides of the starting sections of the first separator and second separator are fixedly connected, and the first electrode plate is sandwiched between the first separator and the second separator, such that the first separator and the second separator limit only displacement of the first electrode plate along the width direction rather than displacement of the first electrode plate along a length direction. This can not only ensure alignment degree of the starting sections during feeding of the first electrode plate but also ensure that the first separator, the first electrode plate, and the second separator can slide relative to each other during winding to adapt to different winding diameters, allowing for close attachment between the first separator, the first electrode plate, and the second separator, ensuring winding quality of the electrode assembly and increasing success rate of winding of the electrode assembly, thereby effectively improving the production yield rate of the battery cell.

According to another aspect of this application, a battery is provided and includes the foregoing battery cell.

According to another aspect of this application, an electric apparatus is provided and includes the foregoing battery, where the battery is configured to supply electrical energy.

According to another aspect of this application, a method for winding an electrode assembly is provided. The electrode assembly includes a first separator, a first electrode plate, and a second separator that are stacked. The method for winding an electrode assembly includes: sequentially stacking starting sections of the first separator, the first electrode plate, and the second separator, and along a width direction of the first electrode plate, fixedly connecting partial edges of two sides of the starting sections of the first separator and second separator; and winding the first separator, the first electrode plate, and the second separator.

In the electrode assembly, the partial edges of the two sides of the starting sections of the first separator and second separator are fixedly connected, and the first electrode plate is sandwiched between the first separator and the second separator, such that the first separator and the second separator limit only displacement of the first electrode plate along the width direction rather than displacement of the first electrode plate along a length direction. This can not only ensure alignment degree of the starting sections during feeding of the first electrode plate but also ensure that the first separator, the first electrode plate, and the second separator can slide relative to each other during winding to adapt to different winding diameters, allowing for close attachment between the first separator, the first electrode plate, and the second separator, ensuring winding quality of the electrode assembly and increasing success rate of winding of the electrode assembly, thereby effectively improving the production yield rate of the electrode assembly.

In an optional manner, the method for winding an electrode assembly further includes: along the width direction, fixedly connecting partial edges of two sides of terminating sections of the first separator and second separator. The partial edges of the two sides of the terminating sections of the first separator and second separator being fixedly connected can ensure that the terminating section of the first electrode plate sandwiched between the terminating sections of the first separator and second separator is aligned and closely attached to the first separator and second separator, preventing winding failure of the electrode assembly caused by tail misalignment of the terminating section of the first electrode plate.

In an optional manner, the electrode assembly further includes a second electrode plate. After the partial edges of the two sides of the starting sections of the first separator and second separator are fixedly connected, a starting section of the second electrode plate is fixedly connected to the second separator. The starting section of the second electrode plate being fixedly connected to the second separator ensures alignment degree of the starting section during feeding of the second electrode plate.

In an optional manner, the method for winding an electrode assembly further includes: fixedly connecting a terminating section of the second electrode plate and the second separator. The terminating section of the second electrode plate being fixedly connected to the second separator ensures that the terminating section of the second electrode plate is aligned and closely attached to the second separator, thereby preventing winding failure of the electrode assembly caused by tail misalignment of the terminating section of the second electrode plate.

According to another aspect of this application, a device for winding an electrode assembly is provided. An electrode assembly includes a first separator, a first electrode plate, and a second separator that are stacked. The device for winding an electrode assembly includes: a first composite mechanism configured to fixedly connect, along a width direction of the first electrode plate, partial edges of two sides of starting sections of the first separator and second separator; and a winding mechanism disposed downstream the first composite mechanism and configured to wind the first separator, the first electrode plate, and the second separator to form the electrode assembly.

In the electrode assembly, the partial edges of the two sides of the starting sections of the first separator and second separator are fixedly connected via the first composite mechanism, and the first electrode plate is sandwiched between the first separator and the second separator, such that the first separator and the second separator limit only displacement of the first electrode plate along the width direction rather than displacement of the first electrode plate along a length direction. This can not only ensure alignment degree of the starting sections during feeding of the first electrode plate but also ensure that the first separator, the first electrode plate, and the second separator can slide relative to each other during winding to adapt to different winding diameters, allowing for close attachment between the first separator, the first electrode plate, and the second separator, thereby ensuring winding quality of the electrode assembly and improving winding yield rate of the electrode assembly.

In an optional manner, the first composite mechanism includes a first press-fit structure and a second press-fit structure opposite each other, where the first press-fit structure and the second press-fit structure fit each other for fixedly connecting, along the width direction, the partial edges of the two sides of the starting sections of the first separator and second separator. Through fitting between the first press-fit structure and the second press-fit structure, the partial edges of the two sides of the starting sections of the first separator and second separator are quickly connected and fixed, achieving a stable and reliable structure after fixed connection.

In an optional manner, the first press-fit structure includes a pressing portion and hot-pressing composite portions, where the hot-pressing composite portions are disposed at two ends of the pressing portion in the width direction; the hot-pressing composite portions protrude from the pressing portion; and the hot-pressing composite portions are configured to perform hot-pressing composite on the partial edges of the two sides of the starting sections of the first separator and second separator. The hot-pressing composite portions protruding from the pressing portion can ensure full hot-pressing composite of the partial edges of the two sides of the starting sections of the first separator and second separator, thereby further ensuring stability of connection between the first separator and the second separator.

In an optional manner, the hot-pressing composite portions are annular and protrude from the pressing portion. The hot-pressing composite portions being annular and protruding from the pressing portion ensures that the hot-pressing composite portions can rotate while pressing the first separator and second separator, achieving a function of driving feeding of the electrode assembly.

In an optional manner, the electrode assembly further includes a second electrode plate; and the device for winding an electrode assembly further includes a second composite mechanism, where the second composite mechanism is disposed between the first composite mechanism and the winding mechanism and is configured to fixedly connect a starting section of the second electrode plate and the second separator. With the second composite mechanism provided, the starting section of the second electrode plate is fixedly connected to the second separator, ensuring alignment degree of the second electrode plate.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, same parts are denoted by same reference signs. In the accompanying drawings:
FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic structural exploded view of a terminating section of an electrode assembly according to an embodiment of this application;
FIG. 5 is a schematic structural diagram of a starting section of an electrode assembly according to an embodiment of this application;
FIG. 6 is a schematic structural diagram of an electrode assembly according to an embodiment of this application;
FIG. 7 is a schematic flowchart of a method for winding an electrode assembly according to an embodiment of this application;
FIG. 8 is a schematic flowchart of a method for winding an electrode assembly according to an embodiment of this application;
FIG. 9 is a schematic structural diagram of a device for winding an electrode assembly according to an embodiment of this application;
FIG. 10 is a schematic structural diagram of a device for winding an electrode assembly according to another embodiment of this application;
FIG. 11 is a schematic structural diagram of a first composite mechanism of a device for winding an electrode assembly according to an embodiment of this application; and
FIG. 12 is a schematic structural diagram of a second composite mechanism of a device for winding an electrode assembly according to an embodiment of this application.

Reference signs in the specific embodiments are described as follows:
vehicle 1000;
battery 100; controller 200; motor 300;
box 10; first portion 11; second portion 12;
battery cell 20; end cover 21; electrode terminal 21a; housing 22;
electrode assembly 23; tab 23a; first separator 231; first electrode plate 232; second separator 233; second electrode plate 234; first region 235; second region 236;
device for winding an electrode assembly 500; first composite mechanism 510; first press-fit structure 511; pressing portion 5111; hot-pressing composite portion 5112; second press-fit structure 512; winding mechanism 520; second composite mechanism 530; third press-fit structure 531; fourth press-fit structure 532; feeding mechanism 540; and deviation correction mechanism 550.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically defined.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or may be an internal communication between two components or an interactive relationship between two components. Persons of ordinary skill in the art can understand specific meanings of these terms in this application as appropriate to specific situations.

Currently, from the perspective of market development, application of batteries is becoming more and more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of batteries, market demands for batteries are also expanding.

The electrode assembly serves as an important component in the battery, so higher requirements are imposed on the production yield rate of the electrode assemblies. With the advantages of high yield rate and low cost, winding methods have been widely used in production of electrode assemblies.

During winding of an electrode assembly, starting sections and terminating sections of electrode plates have no tension, and therefore, during feeding, the starting sections of the electrode plates likely suffer from deviation, and terminating sections also likely suffer from tail misalignment, causing low alignment degree of the electrode plates. In addition, the starting sections and terminating sections of the electrode plates are uncontrolled during winding, so the electrode plates and the separators are poorly attached to each other.

To avoid the foregoing problems, in an existing electrode assembly, electrode plates and separators are fully composited through hot pressing before winding, such that the electrode plates and the separators are closely attached and connected to each other, ensuring the alignment between the starting sections and terminating sections.

However, the inventors of this application have noted that during winding, the electrode plates and separators in different layers have different winding diameters. Therefore, after the electrode plates and separators are fully composited through hot pressing before winding, interaction forces between the electrode plates and separators in different layers increase gradually with the increase in the number of winding layers during winding. This leads to wrinkling or even detachment of the electrode plates and separators, causing winding failure.

In view of this, this application provides an electrode assembly, a winding method and device, a battery cell, a battery, and an electric apparatus. In the electrode assembly, partial edges of two sides of starting sections of a first separator and a second separator are fixedly connected, and a first electrode plate is sandwiched between the first separator and the second separator, such that the first separator and the second separator limit only displacement of the first electrode plate along a width direction rather than displacement of the first electrode plate along a length direction. This can not only ensure alignment degree of the starting sections during feeding of the first electrode plate but also ensure that the first separator, the first electrode plate, and the second separator can slide relative to each other during winding to adapt to different winding diameters, allowing for close attachment between the first separator, the first electrode plate, and the second separator, ensuring winding quality of the electrode assembly and increasing success rate of winding of the electrode assembly, thereby effectively improving the production yield rate of the electrode assembly.

The battery disclosed in the embodiments of this application may be used in, but is not limited to, electric apparatuses such as vehicles, ships, or aircrafts.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

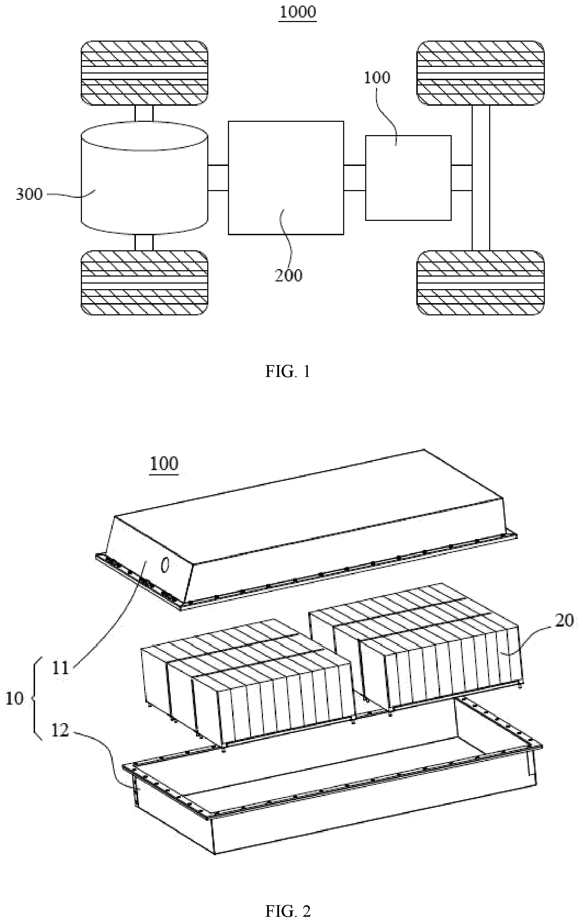

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define an accommodating space for accommodating the battery cell 20. The second portion 12 may be a hollow structure with one end open, and the first portion 11 may be a plate structure. The first portion 11 covers an open side of the second portion 12, so that the first portion 11 and the second portion 12 jointly define an accommodating space. Alternatively, both the first portion 11 and the second portion 12 may be a hollow structure with one side open, and the open side of the first portion 11 covers the open side of the second portion 12. Certainly, the box 10 formed by the first portion 11 and the second portion 12 may be in various shapes, such as a cylinder or a cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

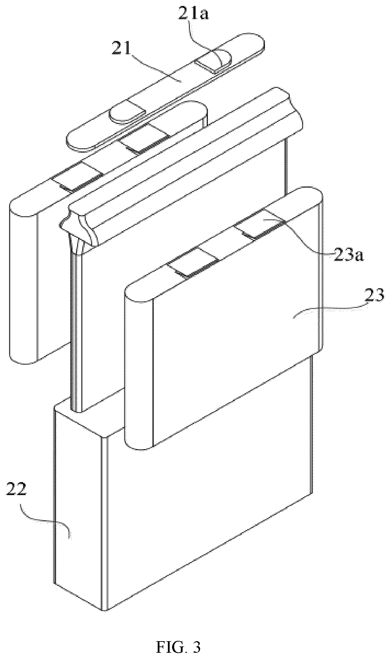

Referring to FIG. 3, FIG. 3 is a schematic structural exploded view of a battery cell 20 in a battery 100 according to some embodiments of this application. The battery cell 20 refers to a smallest unit constituting a battery. As shown in FIG. 3, the battery cell 20 includes an end cover 21, a housing 22, an electrode assembly 23, and other functional components.

The end cover 21 refers to a component that covers an opening of the housing 22 to isolate internal environment of the battery cell 20 from external environment. Without limitation, the end cover 21 may adapt to the housing 22 in shape so as to fit the housing 22. Optionally, the end cover 21 may be made of a material with specified hardness and strength (for example, aluminum alloy), so that the end cover 21 is less likely to deform when subjected to extrusion and collision, allowing the battery cell 20 to have higher structural strength and enhanced safety performance. The end cover 21 may be provided with functional components such as an electrode terminal 21a. The electrode terminal 21a may be configured to be electrically connected to the electrode assembly 23 for outputting or inputting electrical energy of the battery cell 20. In some embodiments, the end cover 21 may also be provided with a pressure relief mechanism configured to relieve internal pressure when the internal pressure or temperature in the battery cell 20 reaches a threshold. The end cover 21 may also be made of various materials such as copper, iron, aluminum, stainless steel, aluminum alloy, and plastic. This is not particularly limited in the embodiments of this application. In some embodiments, an insulator may also be provided at an inner side of the end cover 21. The insulator may be configured to isolate an electrically connected component in the housing 22 from the end cover 21 to reduce the risk of short circuit. For example, the insulator may be made of plastic, rubber, or the like.

The housing 22 is a component fitting with the end cover 21 to form an internal environment of the battery cell 20, where the internal environment formed may be configured to accommodate the electrode assembly 23, an electrolyte, and other components. The housing 22 and the end cover 21 may be independent components, and an opening may be provided in the housing 22, so that the end cover 21 can close the opening to form the internal environment of the battery cell 20. Without limitation, the end cover 21 and the housing 22 may be integrated. The housing 22 may be of various shapes and sizes, for example, a rectangular shape, a cylindrical shape, and a hexagonal prism shape. Specifically, the shape of the housing 22 may be determined based on a specific shape and size of the electrode assembly 23. The housing 22 may be made of various materials such as copper, iron, aluminum, stainless steel, aluminum alloy, and plastic. This is not particularly limited in the embodiments of this application.

The electrode assembly 23 is a component in which electrochemical reactions take place in the battery cell 20. The housing 22 may include one or more electrode assemblies 23. The electrode assembly 23 is mainly formed by winding or stacking a positive electrode plate and a negative electrode plate, and typically a separator is provided between the positive electrode plate and the negative electrode plate. Parts of the positive electrode plate and the negative electrode plate with active substances constitute a body portion of the electrode assembly, while parts of the positive electrode plate and the negative electrode plate without active substances each constitute a tab 23a. A positive tab and a negative tab may both be located at one end of the body portion or be located at two ends of the body portion respectively. During charge and discharge of the battery, a positive electrode active substance and a negative electrode active substance react with an electrolyte, and the tabs 23a are connected to the electrode terminals to form a current loop.

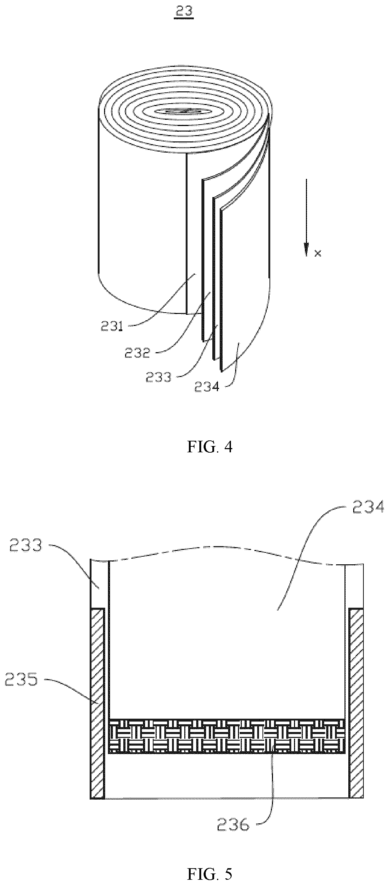

According to an aspect of this application, an electrode assembly is provided. Specifically, referring to FIG. 4 and FIG. 5, FIG. 4 shows an exploded structure of a terminating section of an electrode assembly 23 according to an embodiment of this application, and FIG. 5 shows a structure of a starting section of the electrode assembly 23. The electrode assembly 23 includes a first separator 231, a first electrode plate 232, and a second separator 233 that are stacked. The first electrode plate 232 is sandwiched between the first separator 231 and the second separator 233; and along a width direction of the first electrode plate 232, partial edges of two sides of starting sections of the first separator 231 and second separator 233 are fixedly connected.

The width direction of the first electrode plate 232 is an x-axis direction shown in the figure.

It should be noted that during winding, the head of the first electrode plate 232 may be located at middle sections of the first separator 231 and second separator 233; and therefore, the starting section in this application is a section where the head is attached to the first separator 231 and second separator 233 after feeding of the first electrode plate 232, and the terminating section is a section where the tail of the first electrode plate 232 is attached to the first separator 231 and second separator 233.

As shown in FIG. 5, a region in which the first separator 231 and second separator 233 are fixedly connected is a first region 235 in the figure. The first region 235 is portions of the first separator 231 and second separator 233 that exceed the first electrode plate 232. Specifically, the first separator 231 and second separator 233 may be fixed after hot-pressing composite on the two sides by a hot-pressing composite mechanism, or may be fixed after bonding by an adhesion mechanism. Certainly, other fixed connection manners may also be used, which are not limited in this application.

In the electrode assembly 23, the partial edges of the two sides of the starting sections of the first separator 231 and second separator 233 are fixedly connected, and the first electrode plate 232 is sandwiched between the first separator 231 and the second separator 233, such that the first separator 231 and the second separator 233 limit only displacement of the first electrode plate 232 along the width direction rather than displacement of the first electrode plate 232 along a length direction. This can not only ensure alignment degree of the starting sections during feeding of the first electrode plate 232 but also ensure that the first separator 231, the first electrode plate 232, and the second separator 233 can slide relative to each other during winding to adapt to different winding diameters, allowing for close attachment between the first separator 231, the first electrode plate 232, and the second separator 233, thereby ensuring winding quality of the electrode assembly 23 and improving winding yield rate of the electrode assembly 23.

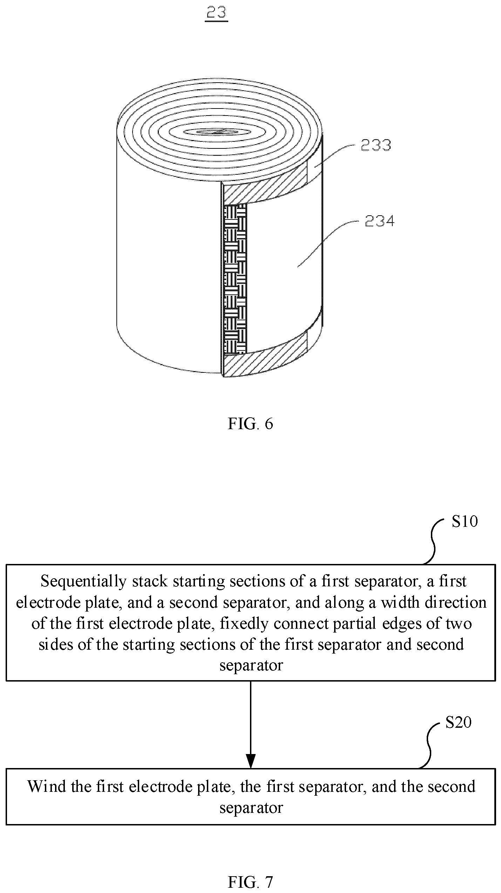

Referring to FIG. 6, FIG. 6 shows a structure of an electrode assembly 23 according to an embodiment of this application. According to some embodiments of this application, along the width direction, partial edges of two sides of terminating sections of the first separator 231 and second separator 233 are fixedly connected.

Similarly, the partial edges of the two sides of the terminating sections of the first separator 231 and second separator 233 being fixedly connected can effectively ensure that terminating sections of the first separator 231, the first electrode plate 232, and the second separator 233 are aligned and closely attached to each other, thereby preventing winding failure of the electrode assembly caused by tail misalignment while such winding failure affects production yield rate of the electrode assembly 23.

Still referring to FIG. 4 and FIG. 5, according to some embodiments of this application, the electrode assembly 23 further includes a second electrode plate 234. A starting section of the second electrode plate 234 is fixedly connected to the second separator 233.

As shown in FIG. 5, a region in which the second electrode plate 234 and the second separator 233 are fixedly connected is a second region 236 in the figure.

The starting section of the second electrode plate 234 is fixedly connected to the second separator 233 to ensure the alignment of the starting section during feeding of the second electrode plate 234. In addition, during winding, only the starting section of the second electrode plate 234 is fixed, and the remaining portion can smoothly slide towards the terminating section relative to the second separator 233 with proceeding of the winding so as to adapt to corresponding winding diameters, thereby allowing the second electrode plate 234 and the second separator 233 to be closely attached to each other.

Still referring to FIG. 6, according to some embodiments of this application, the terminating section of the second electrode plate 234 is fixedly connected to the second separator 233.

The terminating section of the second electrode plate 234 being fixedly connected to the second separator 233 can effectively ensure that terminating sections of the first separator 231, the first electrode plate 232, the second separator 233, and the second electrode plate 234 are aligned and closely attached to each other, thereby preventing winding failure of the electrode assembly caused by tail misalignment.

According to another aspect of this application, a battery cell is provided. The battery cell includes the foregoing electrode assembly 23.

In the battery cell of this application, in the electrode assembly 23, the partial edges of the two sides of the starting sections of the first separator 231 and second separator 233 are fixedly connected, and the first electrode plate 232 is sandwiched between the first separator 231 and the second separator 233, such that the first separator 231 and the second separator 233 limit only displacement of the first electrode plate 232 along the width direction rather than displacement of the first electrode plate 232 along a length direction. This can not only ensure alignment degree of the starting sections during feeding of the first electrode plate 232 but also ensure that the first separator 231, the first electrode plate 232, and the second separator 233 can slide relative to each other during winding to adapt to different winding diameters, allowing for close attachment between the first separator 231, the first electrode plate 232, and the second separator 233, ensuring winding quality of the electrode assembly 23 and increasing success rate of winding of the electrode assembly 23, thereby effectively improving the production yield rate of the battery cell.

According to another aspect of this application, a battery is provided. The battery includes the foregoing battery cell.

In the battery, a plurality of battery cells may be provided, and the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety of the plurality of battery cells is accommodated in a box. Certainly, the battery may alternatively be formed in a manner that the plurality of battery cells are connected in series, parallel, or series-parallel first to form battery modules and then a plurality of battery modules are connected in series, parallel, or series-parallel to form an entirety which is accommodated in the box. The battery may further include other structures. For example, the battery may further include a busbar configured to implement electrical connection between the plurality of battery cells.

According to another aspect of this application, an electric apparatus is provided. The electric apparatus includes the foregoing battery, where the battery is configured to supply electrical energy.

The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

According to another aspect of this application, a method for winding an electrode assembly is provided, which specifically refers to FIG. 7 in which a process of a method for winding an electrode assembly according to an embodiment of this application is showed. The electrode assembly includes a first separator, a first electrode plate, and a second separator. The method for winding an electrode assembly includes the following steps.

S10. Sequentially stack starting sections of the first separator, the first electrode plate, and the second separator, and along a width direction of the first electrode plate, fixedly connect partial edges of two sides of the starting sections of the first separator and second separator.

S20. Wind the first electrode plate, the first separator, and the second separator.

In the electrode assembly, the partial edges of the two sides of the starting sections of the first separator and second separator are fixedly connected, and the first electrode plate is sandwiched between the first separator and the second separator, such that the first separator and the second separator limit only displacement of the first electrode plate along the width direction rather than displacement of the first electrode plate along a length direction. This can not only ensure alignment degree of the starting sections during feeding of the first electrode plate but also ensure that the first separator, the first electrode plate, and the second separator can slide relative to each other during winding to adapt to different winding diameters, allowing for close attachment between the first separator, the first electrode plate, and the second separator, thereby ensuring winding quality of the electrode assembly and improving winding yield rate of the electrode assembly.

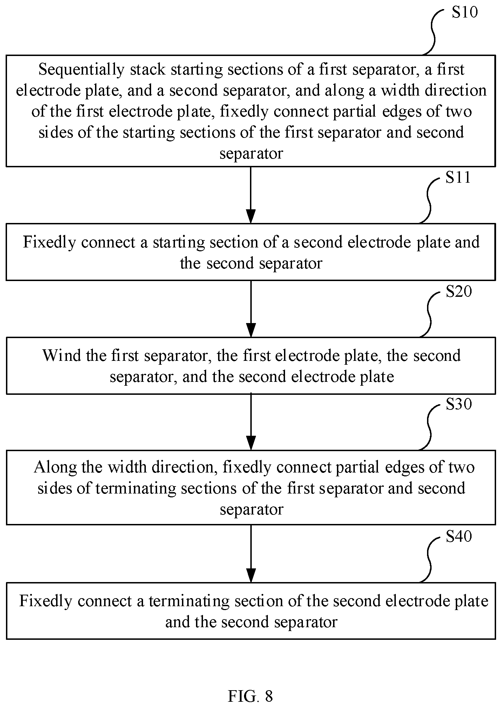

Referring to FIG. 8, FIG. 8 shows a process of a method for winding an electrode assembly according to another embodiment of this application. According to some embodiments of this application, the method for winding an electrode assembly further includes the following step.

530. Along the width direction, fixedly connect partial edges of two sides of terminating sections of the first separator and second separator.

The partial edges of the two sides of the terminating sections of the first separator and second separator being fixedly connected can ensure that the terminating section of the first electrode plate sandwiched between the terminating sections of the first separator and second separator is aligned and closely attached to the first separator and second separator, preventing winding failure of the electrode assembly caused by tail misalignment of the terminating section of the first electrode plate.

Still referring to FIG. 8, according to some embodiments of this application, the electrode assembly further includes a second electrode plate; and after step S 10, the method further includes the following step.

Step S11. Fixedly connect a starting section of the second electrode plate and the second separator.

The starting section of the second electrode plate being fixedly connected to the second separator ensures alignment degree of the starting section during feeding of the second electrode plate; and in addition, during winding, the second electrode plate may slide relative to the second separator to adapt to a corresponding winding diameter.

It can be understood that sequences of steps S 11 and S10 may be interchangeable. The other steps are also interchangeable in a case that effects are not affected.

Still referring to FIG. 8, according to some embodiments of this application, the method for winding an electrode assembly further includes the following step.

S40. Fixedly connect a terminating section of the second electrode plate and the second separator.

The terminating section of the second electrode plate being fixedly connected to the second separator ensures that the terminating section of the second electrode plate is aligned and closely attached to the second separator, thereby preventing scrapping of the electrode assembly caused by tail misalignment of the terminating section of the second electrode plate.

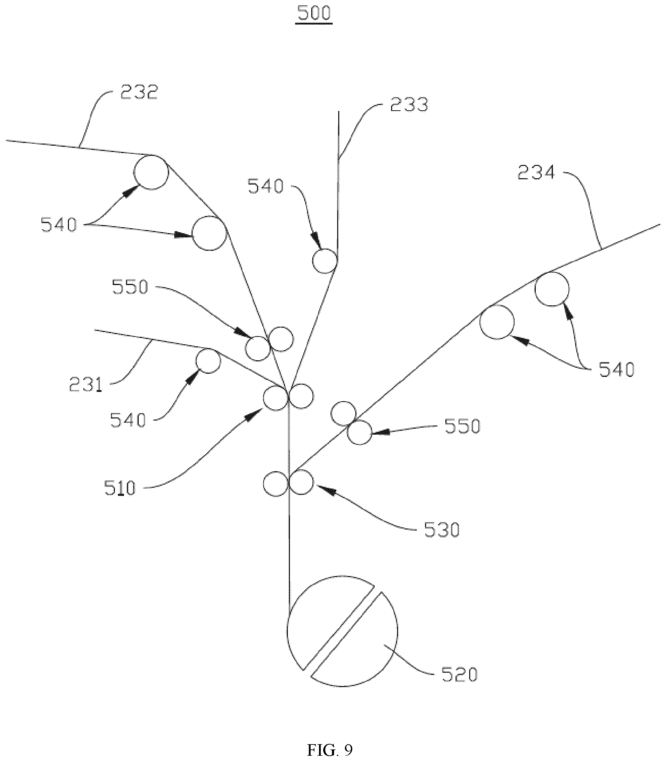

According to another aspect of this application, a device for winding an electrode assembly is further provided, which specifically refers to FIG. 9 in which a structure of a device for winding an electrode assembly 500 according to an embodiment of this application is showed. The electrode assembly 23 includes a first separator 231, a first electrode plate 232, and a second separator 233 that are stacked in sequence. The device for winding an electrode assembly 500 includes a first composite mechanism 510 and a winding mechanism 520. The first composite mechanism 510 is configured to fixedly connect, along a width direction of the first electrode plate 232, partial edges of two sides of starting sections of the first separator 231 and second separator 233. The winding mechanism 520 is disposed downstream the first composite mechanism 510 and is configured to wind the first separator 231, the first electrode plate 232, and the second separator 233 to form the electrode assembly 23.

In the electrode assembly 23, the partial edges of the two sides of the starting sections of the first separator 231 and second separator 233 are fixedly connected via the first composite mechanism 510, and the first electrode plate 232 is sandwiched between the first separator 231 and the second separator 233, such that the first separator 231 and the second separator 233 limit only displacement of the first electrode plate 232 along the width direction rather than displacement of the first electrode plate 232 along a length direction. This can not only ensure alignment degree of the starting sections during feeding of the first electrode plate 232 but also ensure that the first separator 231, the first electrode plate 232, and the second separator 233 can slide relative to each other during winding to adapt to different winding diameters, allowing for close attachment between the first separator 231, the first electrode plate 232, and the second separator 233, ensuring winding quality of the electrode assembly 23 and increasing success rate of winding of the electrode assembly 23, thereby effectively improving the production yield rate of the electrode assembly 23.

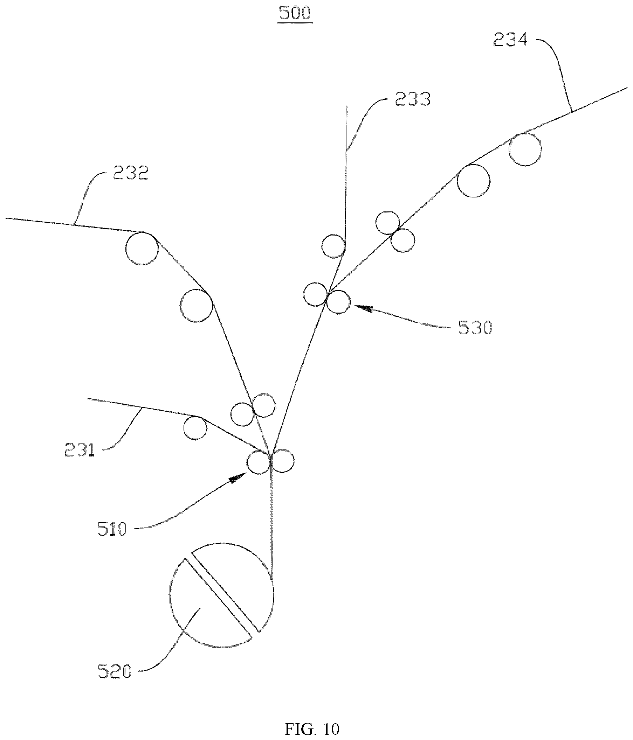

Referring to FIG. 10, FIG. 10 shows a structure of a device for winding an electrode assembly 500 according to another embodiment of this application. In some other embodiments of this application, when the starting section of the second electrode plate 234 and the second separator 233 pass through a second composite mechanism 530, the starting section of the second electrode plate 234 and the second separator 233 can be fixedly connected via the second composite mechanism 530; and when the starting section of the second separator 233 to which the second electrode plate 234 is fixed and the starting sections of the first electrode plate 232 and first separator 231 pass through the first composite mechanism 510, partial edges of two sides of the starting sections of the first separator 231 and second separator 233 can be fixedly connected via the first composite mechanism 510 and then wound by the winding mechanism 520.

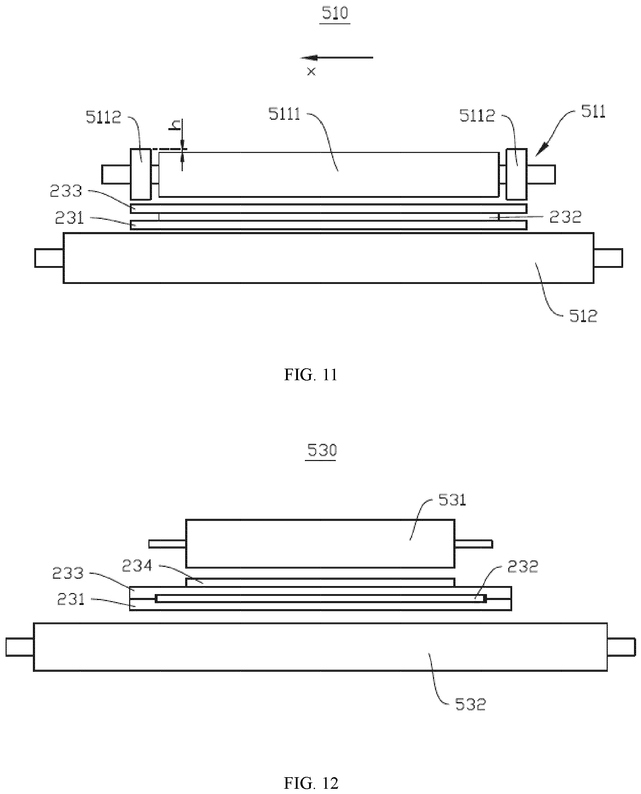

Referring to FIG. 11, FIG. 11 shows a structure of a first composite mechanism 510 in a device for winding an electrode assembly 500 according to an embodiment of this application. According to some embodiments of this application, the first composite mechanism 510 includes a first press-fit structure 511 and a second press-fit structure 512 opposite each other. The first press-fit structure 511 and the second press-fit structure 512 fit each other and are configured to fixedly connect, along a width direction of the first electrode plate 232, partial edges of two sides of the starting sections of the first separator 231 and second separator 233.

When the first press-fit structure 511 and the second press-fit structure 512 move towards each other, the first separator 231, the first electrode plate 232, and the second separator 233 are clamped between the first press-fit structure 511 and the second press-fit structure 512, such that the partial edges of the two sides of the starting sections of the first separator 231 and second separator 233 are fixedly connected.

As shown in FIG. 11, the first press-fit structure 511 and the second press-fit structure 512 may both be cylindrical. The first separator 231, the first electrode plate 232, and the second separator 233 are clamped by an annular side surface of the first press-fit structure 511 and an annular side surface of the second press-fit structure 512. Moreover, two sides of the first press-fit structure 511 may be configured as hot-pressing portions for hot-pressing composite and fixation of the partial edges of the two sides of the starting sections of the first separator 231 and second separator 233. In addition, the first press-fit structure 511 and the second press-fit structure 512 can further rotate to implement movable feeding of the first separator 231, the first electrode plate 232, and the second separator 233.

It can be understood that the first press-fit structure 511 and the second press-fit structure 512 may alternatively be cubes or in other shapes. The partial edges of the two sides of the starting sections of the first separator 231 and second separator 233 stop moving after reaching a position between the first press-fit structure 511 and the second press-fit structure 512. The first press-fit structure 511 and the second press-fit structure 512 move towards each other to implement press-fixation of the partial edges of the two sides of the starting sections of the first separator 231 and second separator 233, then the first press-fit structure 511 and the second press-fit structure 512 move away from each other to return to the original position, and the first separator 231 and second separator 233, which sandwich the first electrode plate 232 and are fixed through pressing, continue to move to be fed.

Specifically, the first press-fit structure 511 and the second press-fit structure 512 moving towards each other may be: the first press-fit structure 511 moving towards the second press-fit structure 512, the second press-fit structure 512 moving towards the first press-fit structure 511, or the first press-fit structure 511 moving towards the second press-fit structure 512 while the second press-fit structure 512 moving towards the first press-fit structure 511. The specific movement may be driven by an air cylinder, an electric cylinder, or a screw, or may be operated manually. When the starting sections of the first separator 231 and second separator 233 pass through the first composite mechanism 510, the first press-fit structure 511 and the second press-fit structure 512 are driven to move towards each other so as to implement press-connection of the partial edges of the two sides of the starting sections of the first separator 231 and second separator 233; and after press fitting is completed, the first press-fit structure 511 and the second press-fit structure 512 move away from each other to ensure normal feeding of the first separator 231 and second separator 233. If it is necessary to fixedly connect the partial edges of the two sides of the terminating sections of the first separator 231 and second separator 233, the foregoing steps can be repeated when the terminating sections of the first separator 231 and second separator 233 pass through the first composite mechanism 510.

Through fitting between the first press-fit structure 511 and the second press-fit structure 512, the partial edges of the two sides of the starting sections of the first separator 231 and second separator 233 are quickly connected and fixed, achieving a stable and reliable structure after fixed connection.

Still referring to FIG. 11, according to some embodiments of this application, the first press-fit structure 511 includes a pressing portion 5111 and hot-pressing composite portions 5112, where the hot-pressing composite portions 5112 are disposed at two ends of the pressing portion 5111 in the width direction; the hot-pressing composite portions 5112 protrude from the pressing portion 5111; and the hot-pressing composite portions 5112 are configured to perform hot-pressing composite on the edges of the two sides of the starting sections of the first separator 231 and second separator 233.

Specifically, the hot-pressing composite portions 5112 protrude from the pressing portion 5111, meaning that a height difference h as shown in FIG. 11 is present between the hot-pressing composite portions 5112 and the pressing portion 5111. The hot-pressing composite manner can implement quick fixation between the partial edges of the two sides of the starting sections of the first separator 231 and second separator 233, improving the winding yield rate, and can ensure structural intactness of the first separator 231, the first electrode plate 232, and the second separator 233.

The hot-pressing composite portions 5112 have high-temperature surfaces and abut against and press an edge surface of the first separator 231 or second separator 233 through the high-temperature surfaces, such that heat is transferred to the first separator 231 or second separator 233, and thus the partial edges of the two sides of the starting sections of the first separator 231 and second separator 233 are fixed through hot-pressing composite.

The pressing portion 5111 therebetween may be configured to press-flatten middle portions of the first separator 231, the first electrode plate 232, and the second separator 233; the hot-pressing composite portions 5112 at the two ends are configured to implement hot-pressing composite of the partial edges of the two sides of the starting sections of the first separator 231 and second separator 233, to ensure that after the hot-pressing composite of the partial edges of the two sides of the starting sections of the first separator 231 and second separator 233, the middle portions of the first separator 231, the first electrode plate 232, and the second separator 233 are flat and closely attached to each other; and the hot-pressing composite portions 5112 protruding from the pressing portion 5111 can ensure full hot-press composite of the partial edges of the two sides of the starting sections of the first separator 231 and second separator 233, thereby further ensuring stability of connection between the first separator 231 and the second separator 233. It can be understood that in some embodiments, the pressing portion 5111 may alternatively be in no contact with the middle portions of the first separator 231, the first electrode plate 232, and the second separator 233, only for connecting the two hot-pressing composite portions 5112.

As shown in FIG. 11, in some embodiments, the pressing portion 5111 and the hot-pressing composite portions 5112 may be spaced apart to prevent the edge of the middle first electrode plate 232 from being hot-pressed during hot pressing of the edges of the first separator 231 and second separator 233.

Still referring to FIG. 11, according to some embodiments of this application, the hot-pressing composite portions 5112 are annular and protrude from the pressing portion 5111.

The hot-pressing composite portions 5112 being annular and protruding from the pressing portion 5111 ensures that the hot-pressing composite portions 5112 can rotate while pressing the first separator 231 and second separator 233, improving processing efficiency and also achieving a function of driving feeding of the electrode assembly 23.

Referring to FIG. 12, FIG. 12 shows a structure of a second composite mechanism 530 in a device for winding an electrode assembly 500 according to an embodiment of this application. According to some embodiments of this application, the electrode assembly 23 further includes a second electrode plate 234; and the device for winding an electrode assembly 500 further includes a second composite mechanism 530, where the second composite mechanism 530 is disposed between the first composite mechanism 510 and the winding mechanism 520 and is configured to fixedly connect a starting section of the second electrode plate 234 and the second separator 233.

As shown in FIG. 12, the second composite mechanism 530 may include a third press-fit structure 531 and a fourth press-fit structure 532. When the third press-fit structure 531 and the fourth press-fit structure 532 move towards each other, the starting section of the second electrode plate 234 and the second separator 233 are composited through hot pressing.

The third press-fit structure 531 and the fourth press-fit structure 532 may both be cylindrical. The starting section of the second electrode plate 234 and the second separator 233 are clamped and composited through hot pressing by an annular side surface of the third press-fit structure 531 and an annular side surface of the fourth press-fit structure 532, such that the starting section of the second electrode plate 234 and the second separator 233 are fixedly connected. In addition, the third press-fit structure 531 and the fourth press-fit structure 532 rotate to implement movable feeding of the second electrode plate 234 and the second separator 233.

Specifically, the third press-fit structure 531 and the fourth press-fit structure 532 moving towards each other may be: the third press-fit structure 531 moving towards the fourth press-fit structure 532, the fourth press-fit structure 532 moving towards the third press-fit structure 531, or the third press-fit structure 531 moving towards the fourth press-fit structure 532 while the fourth press-fit structure 532 moving towards the third press-fit structure 531. The specific movement r may be driven by an air cylinder, an electric cylinder, or a screw, or may be operated manually. When the starting section of the second separator 233 and the second electrode plate 234 pass through the second composite mechanism 530, the third press-fit structure 531 and the fourth press-fit structure 532 are driven to move towards each other so as to implement press-connection of the starting section of the second electrode plate 234 and the second separator 233; and after press fitting is completed, the third press-fit structure 531 and the fourth press-fit structure 532 move away from each other to ensure normal feeding of the second separator 233 and the second electrode plate 234. If it is necessary to fixedly connect the terminating section of the second electrode plate 234 and the second separator 233, the foregoing steps may be repeated when the terminating section of the second separator 233 and the second electrode plate 234 pass through the second composite mechanism 530.

With the second composite mechanism 530 provided, the starting section of the second electrode plate 234 is fixedly connected to the second separator 233, ensuring the alignment degree of the second electrode plate 234.

Still referring to FIG. 9, according to some embodiments of this application, the device for winding an electrode assembly 500 further includes a plurality of feeding mechanisms 540, which are configured to drive the first separator 231, the first electrode plate 232, the second separator 233, and the second electrode plate 234 to be fed, respectively.

Specifically, the feeding mechanisms 540 may be transfer rollers; the first separator 231, the first electrode plate 232, the second separator 233, and the second electrode plate 234 are placed on the transfer rollers; and the transfer rollers rotate to drive the first separator 231, the first electrode plate 232, the second separator 233, and the second electrode plate 234 to be movably fed.

With the feeding mechanisms 540 provided, the first separator 231, the first electrode plate 232, the second separator 233, and the second electrode plate 234 are movably fed, allowing for convenient automatic winding of the electrode assembly 23 and helping to improve the production yield rate of the electrode assembly 23.

Still referring to FIG. 9, according to some embodiments of this application, the device for winding an electrode assembly 500 further includes a plurality of deviation correction mechanisms 550, which are configured to correct feeding angles of the first electrode plate 232 and the second electrode plate 234, respectively.

Specifically, the deviation correction mechanisms 550 are disposed between the feeding mechanisms 540 in a feeding route for the first electrode plate 232 and the first composite mechanism 510 and between the feeding mechanisms 540 in a feeding route for the second electrode plate 234 and the second composite mechanism 530; before the first electrode plate 232 and second electrode plate 234 transferred via the feeding mechanism 540 reach the first composite mechanism 510 and the second composite mechanism 530, an angle at which the first electrode plate 232 enters the first composite mechanism 510 and an angle at which the second electrode plate 234 enters the second composite mechanism 530 are corrected by the deviation correction mechanisms 550.

The deviation correction mechanisms 550 may be two transfer rollers opposite each other. A deviation correction space is formed between annular side surfaces of the transfer rollers. The first electrode plate 232 and second electrode plate 234 move towards a correct feeding direction after passing through the deviation correction space.

The provision of the deviation correction mechanisms 550 can effectively ensure the alignment degree of the first electrode plate 232 and second electrode plate 234 during hot-pressing composite, thereby ensuring accurate winding of the electrode assembly.

In conclusion, it should be noted that the foregoing embodiments are merely intended to describe the technical solutions of this application rather than to limit this application. Although this application has been described in detail with reference to the foregoing embodiments, persons of ordinary skill in the art should understand that they can still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An electrode assembly, **characterized in that**:
the electrode assembly comprises a first separator, a first electrode plate, and a second separator that are stacked;
the first electrode plate is sandwiched between the first separator and the second separator; and
along a width direction of the first electrode plate, partial edges of two sides of starting sections of the first separator and second separator are fixedly connected.

2. The electrode assembly according to claim 1, wherein along the width direction, partial edges of two sides of terminating sections of the first separator and second separator are fixedly connected.

3. The electrode assembly according to claim 1 or 2, wherein the electrode assembly further comprises a second electrode plate, wherein a starting section of the second electrode plate is fixedly connected to the second separator.

4. The electrode assembly according to claim 3, wherein a terminating section of the second electrode plate is fixedly connected to the second separator.

5. A battery cell comprising the electrode assembly according to any one of claims 1 to 4.

6. A battery comprising the battery cell according to claim 5.

7. An electric apparatus comprising the battery according to claim 6, wherein the battery is configured to supply electrical energy.

8. A method for winding an electrode assembly, **characterized in that**:
the electrode assembly comprises a first separator, a first electrode plate, and a second separator that are stacked; and
the method for winding an electrode assembly comprises:
sequentially stacking starting sections of the first separator, the first electrode plate, and the second separator, and along a width direction of the first electrode plate, fixedly connecting partial edges of two sides of the starting sections of the first separator and second separator; and
winding the first separator, the first electrode plate, and the second separator.

9. The method for winding an electrode assembly according to claim 8, wherein the method for winding an electrode assembly further comprises:
along the width direction, fixedly connecting partial edges of two sides of terminating sections of the first separator and second separator.

10. The method for winding an electrode assembly according to claim 8 or 9, wherein the electrode assembly further comprises a second electrode plate; and after the fixedly connecting partial edges of two sides of the starting sections of the first separator and second separator, the method for winding an electrode assembly comprises:
fixedly connecting a starting section of the second electrode plate and the second separator.

11. The method for winding an electrode assembly according to claim 10, wherein the method for winding an electrode assembly further comprises:
fixedly connecting a terminating section of the second electrode plate and the second separator.

12. A device for winding an electrode assembly, **characterized in that**:
the electrode assembly comprises a first separator, a first electrode plate, and a second separator that are stacked; and
the device for winding an electrode assembly comprises:
a first composite mechanism, configured to fixedly connect, along a width direction of the first electrode plate, partial edges of two sides of starting sections of the first separator and second separator; and
a winding mechanism, disposed downstream the first composite mechanism and configured to wind the first separator, the first electrode plate, and the second separator to form the electrode assembly.

13. The device for winding an electrode assembly according to claim 12, wherein the first composite mechanism comprises a first press-fit structure and a second press-fit structure opposite each other, wherein the first press-fit structure and the second press-fit structure cooperate with each other for fixedly connecting, along the width direction, the partial edges of the two sides of the starting sections of the first separator and second separator.

14. The device for winding an electrode assembly according to claim 13, wherein the first press-fit structure comprises a pressing portion and hot-pressing composite portions, wherein the hot-pressing composite portions are disposed at two ends of the pressing portion in the width direction; the hot-pressing composite portions protrude from the pressing portion; and the hot-pressing composite portions are configured to perform hot-pressing composite on the partial edges of the two sides of the starting sections of the first separator and second separator.

15. The device for winding an electrode assembly according to claim 14, wherein the hot-pressing composite portions are annular and protrude from the pressing portion.

16. The device for winding an electrode assembly according to any one of claims 12 to 15, wherein the electrode assembly further comprises a second electrode plate; and the device for winding an electrode assembly further comprises a second composite mechanism, wherein the second composite mechanism is disposed between the first composite mechanism and the winding mechanism and is configured to fixedly connect a starting section of the second electrode plate and the second separator.
